Europäisches Patentamt

(19) European Patent Office (11) Publication number: **0 278 531**
Office européen des brevets **B1**

(12) **EUROPEAN PATENT SPECIFICATION**

(45) Date of publication of the patent specification: **03.01.90**  (51) Int. Cl.⁴: **G01F 1/32,** G01P 5/00

(21) Application number: **88102530.8**

(22) Date of filing: **16.09.82**

(60) Publication number of the earlier application in accordance with Art. 76 EPC: **0119195**

(54) Vortex flow meter frequency adjustment.

(43) Date of publication of application:
**17.08.88 Bulletin 88/33**

(45) Publication of the grant of the patent:
**03.01.90 Bulletin 90/1**

(84) Designated Contracting States:
**DE FR GB**

(56) References cited:
EP-A- 0 032 059
US-A- 3 724 503
US-A- 3 906 792
US-A- 3 937 195
US-A- 4 003 253
US-A- 4 062 238
US-A- 4 116 060

(73) Proprietor: **FORD MOTOR COMPANY LIMITED, Eagle Way, Brentwood Essex(GB)**
(84) Designated Contracting States: **GB**

(73) Proprietor: **FORD FRANCE SOCIETE ANONYME, 344 Avenue Napoléon Bonaparte B.P. 307, F-92506 Rueil Malmaison Cedex(FR)**
(84) Designated Contracting States: **FR**

(73) Proprietor: **FORD-WERKE AKTIENGESELLSCHAFT, Ottoplatz 2 Postfach 21 03 69, D-5000 Köln 21(DE)**
(84) Designated Contracting States: **DE**

(72) Inventor: **Joy, Robert Dean, Route 4 Box 817, Cedar Rapids Iowa 52401(US)**

(74) Representative: **Messulam, Alec Moses et al, A. Messulam & Co. 24 Broadway, Leigh on Sea Essex SS9 1BN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a device for generating vortices in a bonded fluid stream.

It is known to position a generator plate in an air flow to generate Karman vortices. Detection of the frequency of these vortices can be used as an indication of the mass of air flowing by the generator plate. For example, U.S. Patent 4,312,237 issued January 26, 1982 discloses various embodiments of narrow, elongated generator plates used for the generation of Karman vortices in a fluid stream. In one embodiment of the 4,312,237 patent, a generator plate has a shedding section wherein an aperture intersects side surfaces of the generator plate to form a leading aperture edge which services as a shedding corner for the generation of vortices.

Also U.S. Patent 4,312,236, issued January 26, 1982 discloses a vortex generating device having a narrow generator plate which is immersed in a fluid flow to generate Karman vortices. The generator plate has side surfaces parallel to the direction of fluid flow. The side surfaces have a shedding region therein forming shedding corners at which vortices detach from the generator plate.

Air flow meters using such vortex generators have produced stable vortices over a wide range of fluid flow rates. Such devices have functioned particularly well and operated in accordance with the acoustical techniques disclosed in U.S. Patent 3,680,375 to Joy et al.

U.S.-A-4,003,253 relates to a replaceable adapter for vortex-shedding flowmeter provided with a flow tube forming a cylindrical passage through which the fluid to be metered is conducted. The tube has a mounting flange at the inlet thereof and an obstacle assembly mounted within the tube to create vortices. The adapter comprises a pair of rods disposed longitudinally in said tube to restrict the effective area of the passage, the rods being cantilevered from a support flange lying against said mounting flange.

US-A-4,116,060 relates to a massflow sensor comprising a conduit for carrying mass fluid flow to be sensed, a bluff body disposed in said conduit for producing periodic vortices in the mass flow that are at a frequency which is indicative of the mass flow and means for sensing said frequency, density compensation is a part of the step of producing the desired periodic vortices and is accomplished by varying the characteristic dimension of the bluff body and/or cross sectional flow area in relation to the density of mass flow

However, there has been a problem of adjusting the vortex frequency to a precise value at a given flow for flow meters that do not have precise mechanical dimensions.

The vortex flowmeter has the characteristic of having a quasi-digital output where each output pulse represents the passage of a certain amount of fluid. This amount of fluid is determined by the flow duct area and the cross section width of the vortex generator. This relationship is defined by:

$$f = \frac{SQ}{dA} \qquad \text{Equation 1}$$

where f is the vortex frequency
S is the Strouhal constant
Q is the volumetric flow rate
d is the vortex generator width
and A is the flow duct area.

In order to produce flowmeters having an identical vortex frequency to fluid flow relation, the mechanical duct area must be held to precise tolerances.

For some applications where tight tolerances cause a cost penalty, such as in the automative field, a means is needed to adjust some mechanical dimension to change the frequency-to-flow relation in order to offset manufacturing tolerance.

According to the present invention, there is provided a device for generating vortices in a bounded fluid stream, said device comprising fluid flow duct means (31,32) for passing a fluid stream, generator means (33) for generating vortices positioned in said duct (31,32) in the fluid stream and adjustment means for varying the cross sectional area of the fluid flow adjacent said generator, means said generator means including an elongated plate member having an axis of elongation parallel to the direction of flow of said fluid stream, characterised in that said fluid flow duct means has a cross sectional area of different magnitudes along the direction parallel to the fluid flow, and said plate member being longitudinally movable to different cross sectional magnitudes in said duct.

The adjustment means for moving the elongated member comprises a sensor for generating a control signal for varying the cross sectional area of the fluid flow adjacent the plate member and an actuator coupled to the sensor and the plate member for moving the actuator as a function of the output of the sensor.

The invention will now be described further by way of example, with reference to the accompanying drawings, in which :

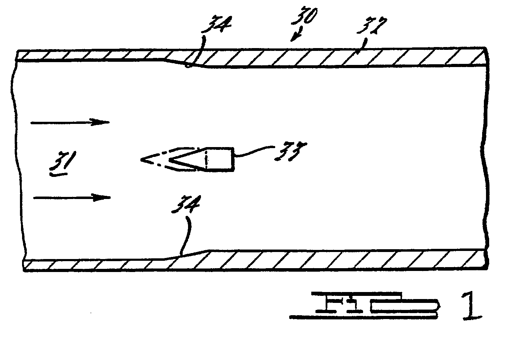

Figure 1 is an air flow meter in accordance with an embodiment of this invention wherein the vortex generator is longitudinally movable to sections of the air flow duct having different interior boundaries.

Referring to Figure 1 an air flow meter 30 includes an air flow path 31 with bounding walls 32. A vortex strut or generator 33 is positioned within air flow path 31 and is movable longitudinally. Opposing interior surfaces of walls 32 have a variable spacing so that the cross sectional area of air flow path 31 is different at different longitudinal positions. Because strut 33 is movable longitudinally, it can be positioned in different size cross sectional areas thereby changing the vortex frequency. Advantageously, a reduction in the cross sectional duct area can be created by a gradual decrease in one or more of the duct sidewalls such as shown in region 34. This causes a gradual increase in the velocity and the vortex strut 33 may be moved through this region to cause a change in the detected vortex frequency to fluid flow relation. Advantageously, the change in cross sectional area along region 34 is linear. Again, this structure will perform satisfactorily with a variety of complex vortex generators. Changes in the duct area have been found to cause corresponding changes in the vorted frequencies.

The structures of Figure 1 shows apparatus for changing the output frequency of a vortex flow meter. Such a change is useful for compensating for variations in mechanical dimensions of the flow meters due to manufacturing tolerances. However, the apparatus may be used for different purposes. The mechanical motion causing a change in the vortex frequency may be a function of the output of pressure and/or temperature sensors to offset changes in gas density and hence cause the air flow meter to indicate mass flow rather than volumetric flow. Other methods could have the mechanical motion be a function of a process such as a programmed fuel enrichment and engine control systems, which could be applied during accelerating conditions and leaning of the fuel/air mixture during decelerating conditions.

Various modifications and variations will no doubt occur to those skilled in the various arts to which this invention pertains. A sensor can be used to actuate the longitudinal movement of vortex strut or generator 33. That is, the vortex frequency can be adjusted either manually or as a function of a sensed parameter. These and other variations are properly considered within the scope of this invention as claimed. This invention has various industrial applications including, but not limited to, the measurement of air flow coming into an internal combustion engine and providing a signal for use by electronic engine controls governing engine operation. In particular, the measurement of the air flow can be used to govern the air fuel ratio supplied to the internal combustion engine.

## Claims

1. A device for generating vortices in a bounded fluid stream, said device comprising fluid flow duct means (31,32) for passing a fluid stream, generator means (33) for generating vortices positioned in said duct (31,32) in the fluid stream and adjustment means for varying the cross sectional area of the fluid flow adjacent said generator means, said generator means including an elongated plate member having an axis of elongation parallel to the direction of flow of said fluid stream, characterised in that said fluid flow duct means has a cross sectional area of different magnitudes along the direction parallel to the fluid flow, and said plate member being longitudinally movable to different cross sectional magnitudes in said duct.

2. A device as claimed in Claim 1, wherein said fluid flow duct means has at least a first cross sectional area and a second cross sectional area smaller in magnitude than said first cross sectional area.

3. A device as claimed in Claim 2, wherein said flow duct means has a transitional region between said first and second cross sectional areas, said transitional region having a decreasing cross sectional area going from said first to said second cross sectional area.

4. A device as claimed in Claim 3, wherein the cross section of said transitional region increases linearly with distance along said fluid flow duct means.

5. A device as claimed in any one of the preceding claims, wherein said adjustment means includes a sensor for generating a control signal for varying the cross sectional area of the fluid flow adjacent said plate member and an actuator coupled to said sensor and said elongated plate member for moving said elongated plate member as a function of the output of said sensor.

## Patentansprüche

1. Einrichtung zum Erzeugen von Wirbeln in einem begrenzten Fluidstrom, wobei die genannte Einrichtung einen Fluidströmungskanal (31, 32) zum übertragen eines Fluidstromes, einen Generator (33) zum Erzeugen von Wirbeln, wobei sich der Generator in dem genannten Kanal (31, 32) in dem Fluidstrom befindet, und eine Einstellvorrichtung zum Variieren des Querschnittsbereiches des Fluidstromes neben dem genannten Generator umfaßt, wobei der genannte Generator ein längliches Plattenelement mit einer Ausdehnungsachse aufweist, die parallel zur Strömungsrichtung des genannten Fluidstroms verläuft, dadurch gekennzeichnet, daß der genannte Fluidströmungskanal einen Querschnittsbereich von unterschiedlichen Größenordnungen entlang der zum Fluidstrom parallelen Richtung aufweist und wobei das genannte Plattenelement in Längsrichtung auf unterschiedliche Querschnittsgrößenordnungen in dem genannten Kanal bewegt werden kann.

2. Einrichtung nach Anspruch 1, worin der genannte Fluidströmungskanal wenigstens einen ersten Querschnittsbereich sowie einen zweiten Querschnittsbereich aufweist, der kleiner ist als der genannte erste Querschnittsbereich.

3. Einrichtung nach Anspruch 2, worin der genannte Strömungskanal eine Übergangsregion zwischen dem genannten ersten und dem genannten zweiten Querschnittsbereich aufweist, wobei die genannte Übergangsregion von dem genannten ersten auf den genannten zweiten Querschnittsbereich einen abnehmenden Querschnittsbereich aufweist.

4. Einrichtung nach Anspruch 3, worin der Querschnitt der genannten Übergangsregion linear mit dem Abstand entlang dem genannten Fluidströmungskanal zunimmt.

5. Einrichtung nach einem der vorhergehenden Ansprüche, worin die genannte Einstellvorrichtung einen Sensor zum Erzeugen eines Steuersignals zum Variieren des Querschnittsbereiches der Fluidströmung neben dem genannten Plattenelement sowie einen Kraftschalter aufweist, der mit dem genannten Sensor und dem genannten länglichen Plattenelement gekoppelt ist, um das längliche Plattenelement in Abhängigkeit von dem Ausgangssignal des genannten Sensors zu bewegen.

Revendications

1. Dispositif générateur de toubillons dans un courant de fluide canalisé, ce dispositif comprenant une conduite d'écoulement de fluide (31, 32) servant à faire passer un courant de fluide, un générateur (33) servant à produire des tourbillons et situé dans cette conduite (31, 32), dans le courant de fluide, et des moyens d'ajustement servant à faire varier l'aire de la section transversale de l'écoulement de fluide au voisinage du générateur, ce générateur comprenant une pièce formée d'une plaque allongée ayant un axe longitudinal parallèle à la direction d'écoulement du courant de fluide, caractérisé en ce que la conduite d'écoulement de fluide possède une section transversale dont l'aire a des grandeurs différentes le long de la direction parallèle à l'écoulement de fluide et en ce que la pièce formée d'une plaque est mobile dans le sens de la longueur au niveau de sections transversales de la conduite de différentes grandeurs.

2. Dispositif suivant la revendication 1, dans lequel la conduite d'écoulement de fluide possède au moins une première section transversale et une seconde section transversale dont l'aire a une grandeur plus faible que celle de la première section.

3. Dispositif suivant la revendication 2, dans lequel la conduite d'écoulement possède une zone de transition entre la première et la seconde sections transversales, cette zone de transition présentant une aire décroissante en section transversale lorsqu'on va de la première vers la seconde section transversale.

4. Dispositif suivant la revendication 3, dans lequel la section transversale de la zone de transition croît de manière linéaire avec la distance suivant la longueur de la conduite d'écoulement de fluide.

5. Dispositif suivant l'une quelconque des revendications précédentes, dans lequel les moyens d'ajustement comprennent un détecteur, servant à produire un signal de commande permettant de faire varier l'aire de la section transversale de l'écoulement de fluide au voisinage de la pièce formée d'une plaque, et un actionneur couplé à ce détecteur et cette pièce allongée formée d'une plaque de façon à déplacer cette dernière en fonction de la sortie du détecteur.

FIG. 1